# EUROPEAN PATENT APPLICATION

(11) **EP 2 223 793 A1**
(43) Date of publication of application: **01.09.2010**
(21) Application number: 10001947.0
(22) Date of filing: 25.02.2010
(51) Int. Cl.: B29C 65/16, B29C 65/44, B65H 19/18

(54) **Method of producing sheet joined body and sheet joined body**

(30) Priority: 26.02.2009 JP 2009044207
(71) Applicant: Nitto Denko Corporation, Ibaraki-shi Osaka 567-8680 (JP)
(72) Inventor: Matsuo, Naoyuki, Ibaraki-shi Osaka 567-8680 (JP)
(74) Representative: Stolmár Scheele & Partner

(57) **Abstract**

An object of the present invention is to provide a method of producing a sheet joined body (5) that is unlikely to make a sheet joined body cause a stepped portion on at least one side thereof and is capable of providing an excellent joining strength to a sheet joined body (5). Provided is a method of producing a sheet joined body (5), which includes a covering step of bringing end faces of sheet members (1,2), which sheet members (1,2) containing a thermoplastic resin, into abutment with each other to provide an abutted portion and covering one side of the abutted portion with a joining member (3), and a joining step of irradiating a portion covered with the joining member (3) with laser light to fusion-bond the sheet members (1,2) and the joining member (3) together, thereby joining the sheet members (1,2) together.

## Description

This application claims priority from Japanese Patent Application No. 2009-044207, which is incorporated herein by reference.

The present invention relates to a method of producing a sheet joined body, and a sheet joined body, and more particularly to a method of producing a sheet joined body that produces a sheet joined body by joining band-shaped sheet members, and a sheet joined body with band-shaped sheet members joined together.

Hitherto, when band-shaped sheet members are to be continuously fed to a processing machine to be processed, in order to successively feed a newly fed sheet member subsequent to a preceding sheet member to the processing machine, a sheet joined body with a leading end of the newly fed sheet member joined to a tail end of the preceding sheet member is fabricated.

Not only for this case, fabrication of a sheet joined body by joining the end portions of sheet members together is widely carried out.

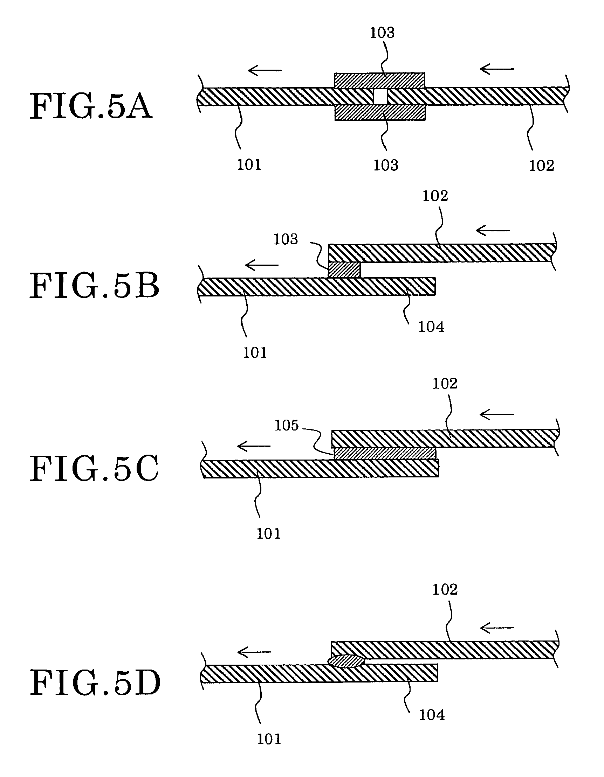

As a sheet joined body producing method of this kind, as shown in FIG. 5A, a method is known, in which a tail end of a preceding sheet member 101 is held abutting against a leading end of a newly fed sheet member 102, and adhesive tapes 103, 103 are attached to both the sheet members onto both the upper and lower surfaces, covering the abutted portion, thereby joining the two sheet members 101, 102 together and hence fabricating a sheet joined body.

In a case where the above method is employed, stepped portions are caused on both upper and lower sides of a sheet joined body due to the adhesive tapes 103 on the joined portion, and for example, there is a problem in that a coated film coated in a subsequent coating step may cause liquid stagnation due to the stepped portions, or a conveying roll or a nip roll may contact edges of the adhesive tapes 103 and hence may be contaminated or damaged. Another problem lies in that an adhesive agent of the adhesive tapes 103 may be fluidized due to the heat such as in a drying step, and hence the joining strength may be deteriorated.

As shown in FIG. 5B, there is proposed another method of producing a sheet joined body, in which a newly fed sheet member 102 is overlapped onto a preceding sheet member 101, and they are joined together via an adhesive tape 103 previously disposed at a leading end of the newly fed sheet member 102, and then a tail extension 104 formed at the tail end portion of the preceding sheet member 101 is cut.

When the above method is employed, stepped portions of the joined portion are caused on both the upper and lower sides, and the tail extension 104 is formed at the tail end of the preceding sheet member 101, which causes a problem in that the tail extension 104 flutters when in conveying the sheet members, and there is a problem in that generation of refuses is triggered, in addition to the aforesaid problem due to the stepped portion.

As shown in FIG. 5C, there is proposed another method of producing a sheet joined body, in which a newly fed sheet member 102 is overlapped onto a preceding sheet member 101, and they are joined together via an adhesive previously disposed at an overlapped portion (cf. Patent Document 1).

In a case where the above method is employed, stepped portions are caused on both the upper and lower sides of a joined portion, various problems due to stepped portions may be caused as described above.

Furthermore, as shown in FIG. 5D, there is proposed still another method of producing a sheet joined body, in which a newly fed sheet member 102 is overlapped onto a preceding sheet member 101 from above, and the overlapped portion is irradiated with laser light, thereby joining the sheet members together.

However, even in a case where this method is employed, there is a problem due to the stepped portions on both the upper and lower sides, and a problem in that dusts or the like are easy to be generated due to fluttering of the tail extension 104.

### [Prior Art Document]

Patent Document 1: Japanese Patent Application Laid-open No. Hei-9-143432

The present invention has been conceived in consideration of the above problems associated with the conventional arts. It is an object of the present invention to provide a method of producing a sheet joined body that is unlikely to make a sheet joined body cause a stepped portion on at least one side thereof and is capable of providing an excellent joining strength to a sheet joined body. It is another object of the present invention to provide a sheet joined body that is unlikely to cause a stepped portion on at least one side thereof and is capable of having an excellent joining strength.

According to the present invention, there is provided a method of producing a sheet joined body, which includes a covering step of bringing end faces of sheet members, which sheet members containing a thermoplastic resin, into abutment with each other to provide an abutted portion and covering one side of the abutted portion with a joining member, and a joining step of irradiating a portion covered with the joining member with laser light to fusion-bond the sheet members and the joining members together, thereby joining the sheet members together.

According to the above sheet joined body producing method, the sheet members containing the thermoplastic resin absorb laser light and convert light energy into thermal energy. Whereby, the sheet members are once molten with the generated heat and then solidified so that the sheet members are fusion-bonded to the joining member. Thus, the sheet joined body can be provided with a joining strength by the fusion-bonding.

Since the joining can be made even without an adhesive or the like, it is possible to suppress deterioration of the joining strength due to fluidizing of the adhesive, which is caused, for example, by the heating of the produced sheet joined body.

In addition, since one side of the abutted portion of the end faces of the sheet members is covered with the joining member, a stepped portion is unlikely to be caused on the opposite side, and thus it is possible to suppress occurrence of the conventional problem due to stepped portion which may be caused on a joined portion.

In the sheet joined body producing method of the present invention, a light absorbing agent is preferably disposed between the sheet members and the joining member in the covering step.

According to this sheet joined body producing method, the light energy of laser light is efficiently converted into thermal energy by the light absorbing agent disposed between the sheet members and the joining member so that the sheet members can be more easily molten. Thus, there is an advantage in that the sheet members and the joining member can be more easily joined together.

In the sheet joined body producing method of the present invention, the joining member, which contains a light absorbing agent, is preferably used.

According to the sheet joined body producing method, the light energy of laser light is efficiently converted into thermal energy by the joining member disposed adjacent to the sheet members so that the sheet members can be more easily molten by the heat generated in the joining member. Thus, there is an advantage in that the sheet members and the joining member can be more easily joined together.

In the sheet joined body producing method of the present invention, it is preferable to use the joining member that is made of a resin material of the same kind as that of at least one of the sheet members.

According to the sheet joined body producing method, in which the joining member and at least one of the sheet members are made of the resin material of the same kind, a portion of the sheet member and a portion of the joining member, which portions have been molten by laser light, are easily fused together and then solidified. Thus, there is an advantageous effect in that the sheet member and the joining member can be more securely fusion-bonded to each other.

According to another aspect of the present invention, there is provided a sheet joined body, in which sheet members containing a thermoplastic resin are joined together with end portions thereof held in abutment with each other, in which one side of the abutted portion of the end portions is covered with a joining member, and a portion covered with the joining member is irradiated with laser light to have the sheet members and the joining member fusion-bonded to each other.

According to the present invention, it is possible to produce a sheet joined body that suppresses occurrence of a stepped portion on at least one side thereof, and is provided with an excellent joining strength.

### BRIEF DESCRIPTION OF THE DRAWINGS

- FIG. 1: is a perspective view showing the relationship between a preceding first sheet member 1 and a newly fed second sheet member 2 subsequent thereto, before a sheet joined body is produced.
- FIGS. 2A-2D: are schematic step views, showing the respective steps of producing a sheet joined body according to a sheet joined body producing method of a first embodiment.
- FIGS. 3A-3D: are schematic step views, showing the respective steps of producing a sheet joined body according to a sheet joined body producing method of a second embodiment.
- FIGS. 4A-4C: are schematic step views, showing the respective steps of producing a sheet joined body according to a sheet joined body producing method of a third embodiment.
FIGS. 5A-5D are views showing a part of a cross section of a sheet joined body produced by a conventional producing method.

Hereinafter, preferred embodiments according to the present invention will be described with reference to the attached drawings.

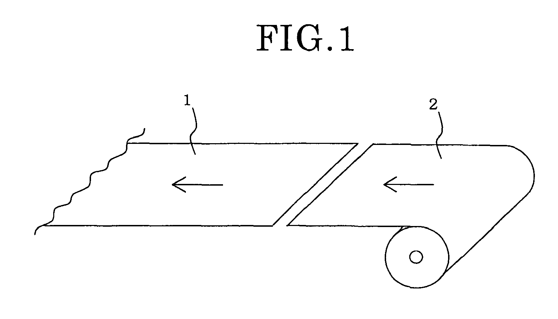

FIG. 1 shows sheet members for use in a method of producing a sheet joined body of a first embodiment.

As shown in FIG. 1, a sheet joined body producing method of the first embodiment is applicable, for example, to a case, where a sheet member 1 (hereinafter referred also to a first sheet member) formed into an elongated band shape and containing a thermoplastic resin is fed to a predetermined processing means (not shown), during the feeding of the first sheet, a newly fed sheet member 2 (hereinafter referred also to a second sheet member) formed in the same manner and contains a thermoplastic resin is joined to the first sheet member 1 at the timing, at which a terminal end of the first sheet member 1 is about to be rolled out, thereby continuing the processing steps by the processing means.

The first sheet member 1 and the second sheet member 2 are generally made of the same kind of thermoplastic resin, while on the other hand, the sheet members of the present invention are not necessarily limited to the sheet members made of the same kind of material, and as long as they contain a thermoplastic resin, the sheet members may be made of different kinds of material. For example, it is possible to use sheet materials respectively containing different kinds of thermoplastic resins having compatibility.

Examples of the thermoplastic resin include polycarbonate, polyvinyl alcohol, polyethylene, polypropylene, polyethylene terephthalate, polyvinyl chloride, thermoplastic polyimide, triacetylcellulose, polymethyl methacrylate, norbornene resin, polyoxymethylene, polyether ether ketone, polyetherimide, polyamideimide, polybutadiene, polyurethane, polystyrene, polymethylpentene, polyamide, acrylic resin, cycloolefin polymer, polyethersulfone, polyarylate, polyethylene naphthalate, and polyphenylene sulfide.

Since the processing treatment to the sheet members 1, 2 is made while the sheets are being conveyed by a so-called roll-to-roll system, the thickness of the sheet members 1, 2 is preferably in the range of 1 µm to 2 mm, more preferably in the range of 5 µm to 500 µm, and still more preferably in the range of 10 µm to 300 µm. The thickness of the first sheet member 1 is generally the same as the thickness of the second sheet member 2, but they may be different from each other.

Furthermore, the sheet members 1, 2 each may be of a single layer or plural layers. A sheet member of plural layers may be made by, for example, a laminate of a substrate layer and a protection film layer having an adhesive layer containing a tacky agent and provided on one side thereof.

In a case where such sheet members of plural layers are joined together, it is possible to temporarily peel off each layer to allow the respective layers to be joined independently of each other, or possible to join the plural layers without peeling. In a case where a substrate layer has poor compatibility with a protection film layer and does not accomplish fusion-bonding between the layers, a sheet joined body 5 produced by joining the sheets of plural layers without peeling, the sheet joined body 5 causes separation between the substrate layer and the protection film layer when in use, and it may be turned into a sheet joined material having the substrate layers joined together or the protection film layers joined together. The detailed description for this production method will be made in a third embodiment later described.

The sheet joined body producing method of the first embodiment carries out a preparation step of cutting the first and second sheet members 1, 2 to form end faces 1a, 2a of them, a covering step of bringing the end portions of sheet members into abutment with each other after the preparation step and covering one side of the abutted portion with a joining member, a joining step of irradiating the portion covered with the joining member with laser light to fusion-bond the sheet members to the joining member, thereby joining the sheet members together to fabricate a sheet joined body, and a take-out step of taking out the sheet joined body.

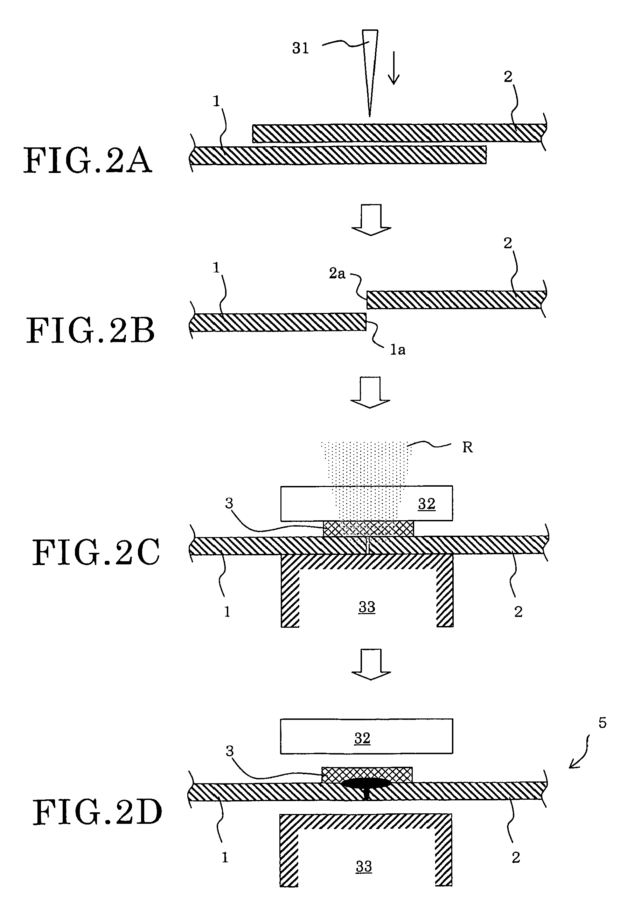

FIGS. 2A-2D are schematic step views, showing the respective steps of producing a sheet joined body 5 according to the sheet joined body producing method of the first embodiment. In the first embodiment, as shown in FIGS. 2A-2D, two sheet members, namely a first sheet member 1 and a second sheet member 2 are joined together to produce a sheet joined body 5.

FIG. 2A is a side view showing a state of the preparation step in the sheet joined body producing method of this embodiment, FIG. 2B is a side view showing a state of the covering step carried out after the preparation step, FIG. 2C is a side view showing a state of the joining step carried out after the covering step, and FIG. 2D is a side view showing a state of the take-out step carried out after the joining step.

Now, the description will be made for the respective steps.

In the preparation step, as shown in FIG. 2A, first, a terminal end portion of the preceding first sheet member 1 and a leading end portion of the newly fed second sheet member 2 are overlapped to each other, and a given position of an overlapped are is cut by a cutting means 31.

As shown in FIG. 2B, the tail end of the first sheet member 1 and the leading end of the second sheet member 2 have the same end face shapes (a tail end face 1a of the first sheet member 1 and a leading end face 2a of the second sheet member 2), by the above cutting.

No limitation is intended to the shape of the cutting line, and for example, it may be of a straight line shape, a wave shape or a serration shape. From the view points that the joining strength is to be increased by increasing the joined area of the sheet members and a sheet member is to be prevented from being broken apart by dispersing the stress applied to the joined surface in the subsequent processing steps, it is preferable to employ a wave shape, a serration shape or the like, or to cut diagonally relative to a width direction of the sheet members 1, 2.

Then, in the covering step, as shown in FIG. 2C, the end portion 1a of the first sheet member 1 and the end portion 2a of the second sheet member 2 are positioned at a center portion of an upper surface of a plate-shaped stage 33, and the first sheet member 1 and the second sheet member 2 are disposed with these end portions held in abutment with each other, and the joining member 3 is disposed on the same side as the laser irradiation side with respect to the sheet members 1, 2 so as to cover the abutted portion of the end portion 1a of the first sheet member 1 and the end portion 2a of the second sheet member 2.

A transparent glass plate 32 is disposed above the thus disposed joining member 3, and the transparent glass plate 32 is pressed downwards (towards the stage) to fix the positions of the first sheet member 1, the second sheet member 2 and the joining member 3 by this pressing.

No limitation is intended to the material of the stage 33, and examples thereof include metal, glass, resin, rubber and ceramics. From the view point that more uniform pressing can be achieved when in joining the sheet members 1, 2 having a relatively great width, resin or rubber, which is relatively low in hardness and has a cushioning property, is preferably used.

No limitation is intended to a material of the joining member 3, as long as the sheet members 1, 2 can be fusion-bonded to the joining member 3.

The joining member 3 is preferably made of the same kind of resin material as that of at least one of the sheet members. With the joining member 3 made of the same material as that of at least one of the sheet members, a resin material of the said sheet member and a resin material of the joining member 3 can be easily fused to each other after molten with heat of laser light, and then solidified. Thus, at least one of the sheet members can be more securely fusion-bonded to the joining member 3.

From the view point that the said sheet member and the joining member 3 can be more securely fusion-bonded to each other, both the sheet members 1, 2 and the joining member 3 are preferably made of the same kind of resin material.

In a case where the resin material of the first sheet member 1 is different from the resin material of the second sheet member 2, the joining member 3 is preferably made of a resin material that can be fused to both the resin material of the first sheet member 1 and the resin material of the second sheet member 2. Even if the resin material of the first sheet member 1 and the resin material of the second sheet member 2 are not easy to be fused to each other, the joining member 3 is capable of being fused to both the resin materials with heat of laser irradiation, so that the joining member 3 can be securely fusion-bonded to both the sheet members 1, 2. Thus, by using such joining member 3, it is possible to fabricate a sheet joined body 5 having an excellent strength, even if the resin materials of the sheet members 1, 2 are different from each other.

In the sheet joined body producing method, it is preferable to use a joining member 3 having a metal layer formed of a metal material, and dispose this joining member 3 so as to allow the sheet members 1, 2 to be fusion-bonded to this metal layer.

Using the joining member 3 having a metal layer in the sheet joined body producing method produces an advantageous effect in that, when thermoplastic resins used in the sheet members 1, 2 are molten with heat generated by laser light, and then the sheet members 1, 2 are fusion-bonded to the metal layer, an anchoring effect of the surface of the metal layer enables the sheet members 1, 2 to be more securely fusion-bonded to the metal layer, and thus the joining strength of the sheet joined body 5 can further increase. Since the metal material has a relatively high thermal conductivity, heat generated by laser light is easy to transfer to the sheet members 1, 2 via the metal layer, so that the thermoplastic resins used in the sheet members 1, 2 can be more easily molten, and hence the sheet members 1, 2 can be more securely joined with the joining member 3 by the fusion-bonding of such molten thermoplastic resins.

Examples of metal material of the metal layer include stainless steel (SUS), aluminium and copper. The metal layer preferably has a surface roughness Ra of 0.05-1 µm. The surface roughness Ra is a value measured according to JIS B0601-2001.

A preferable specific example of the joining member 3 having a metal layer made of a metal material includes a metal foil.

If it is expected that laser light R is not satisfactorily absorbed at interfaces between the sheet members 1, 2 and the joining member 3, it is possible that a light absorbing agent is previously disposed, for example, between the first sheet member 1 and the joining member 3, or between the second sheet member 2 and the joining member 3 in the covering step to improve the light absorbing performance (heat build-up performance).

The light absorbing agent is preferably coated on the surface of the joining member 3 when in use. Specifically, it is preferable that the joining member 3 is disposed to allow the light absorbing agent coated surface to be abutted against the sheet members 1, 2, and a light absorbing agent is disposed between the first sheet member 1 and the joining member 3, or between the second sheet member 2 and the joining member 3.

When a light absorbing agent is coated on the surface of the joining member 3 that is relatively small in size and easy to be handled, the energy of the laser light R can be easily and efficiently converted into thermal energy, even if the light absorbing agent is not coated or impregnated into a relatively large sized sheet member as an additional treatment.

In a case where the joining member 3 is disposed on the same side as the laser irradiation side relative to the sheet members 1, 2, or a case where the sheet members 1, 2 and the joining member 3 are disposed so as to allow the laser light to transmit through the joining member 3 and reach the sheet members 1, 2 and additionally the joining member 3 is disposed so as to allow the light absorbing agent coated surface to be abutted against the sheet members 1, 2, it is preferable that the joining member 3 has a relatively high transmittance relative to the wavelength of the laser light. Specifically, the joining member 3 preferably has a transmittance of 40% or higher, and more preferably a transmittance of 60% or higher, relative to the wavelength of laser light.

Examples of the light absorbing agent include pigment using a porphyrin compound, dye and carbon black. Examples of dye include a phthalocyanine compound, a naphthalocyanine compound, a polymethine compound, a diphenylmethane compound, a triphenylmethane compound, a quinone compound and an azo compound.

For coating the light absorbing agent, it is possible to use conventional means, such as ink jet, coater, stamper, dispenser, spray (including one-fluid type, two-fluid type and ultrasonic type), and screen printing. Specifically, a light absorbing agent can be coated on the surface of the joining member 3 by the coating method, in which the light absorbing agent is diluted with an organic solvent.

The joining member 3 preferably has the aforesaid light absorbing agent. With the joining member containing the light absorbing agent, the light energy of the laser light can be efficiently converted into thermal energy in the joining member 3 disposed adjacent to the sheet members 1, 2 without the necessity to coat the joining member 3 with a light absorbing agent, and the sheet members 1, 2 can be easily fusion-bonded to the joining member 3 with generated heat, thereby producing an advantageous effect in that the sheet members 1, 2 can be more easily joined to the joining member 3. Even with the joining member 3 containing the light absorbing agent, the joining member 3 may be used after it is coated on its surface with a light absorbing agent in the manner as mentioned above.

Since the joining member 3 is relatively small, coating a light absorbing agent on the joining member 3 or containing a light absorbing agent in the joining member may be carried out by a relatively simple operation, as compared with the case in which a light absorbing agent is coated on or contained in relatively large-sized sheet members 1, 2. In the sheet joined body producing method of this embodiment, by coating the joining member 3, which is easy to be handled, with a light absorbing agent, or having the joining member 3 containing a light absorbing agent, it is possible to allow laser light to be absorbed in the joining member 3 or in a portion adjacent to the joining member 3 and thus provide easy generation of heat, so that the sheet joined body thus produced is relatively easily provided with an excellent joining strength by utilizing fusion-bonding due to the generation of heat.

No limitation is intended to the thickness of the joining member 3, but from the view point of handling properties, the joining member 3 has a thickness of preferably in the range of 20-50 µm, and more preferably in the range of 25-150 µm. The length (width of the joining member 3) along the lengthwise direction of the sheet members 1, 2 is generally in the range of 2-100 mm.

In the joining step (cf. FIG. 2C), while keeping pressing the transparent glass plate 32 onto the joining member 3, laser light R is irradiated onto a portion, in which the end portion 1a of the first sheet 1 and the end portion 2a of the second sheet member 2 are covered with the joining member 3, from above the transparent glass plate 32.

Then, the laser light R which has transmitted through the transparent glass plate 32 is allowed to reach the interface at which the joining member 3 contacts the first sheet member 1 and the interface at which the joining member 3 contacts the second sheet member 2, and the laser light R which has been irradiated is allowed to be mostly absorbed at these interfaces, thereby allowing the light energy to be converted into the thermal energy. Thus, fusion-bonding between the joining member 3 and the first sheet member 1, and fusion-bonding between the joining member 3 and the second sheet member 2 are carried out.

Since heat generated by the irradiation of laser light R is capable of allowing the tail end face 1a of the first sheet member 1 and the leading end face 2a of the second sheet member 2 to be molten, so that the end portions of the sheet members 1, 2 held in abutment with each other can be fusion-bonded to each other. For giving a large joining strength to the sheet joined body, the end portions of the sheet members 1, 2 held in abutment with each other are preferably fusion-bonded to each other.

No limitation is intended to the manner of irradiation of the laser light R in the joining step, which may be achieved by, for example: a method in which a spot beam of a given size obtained by a condenser is scanned at a predetermined rate on a portion, in which the end portion 1a of the first sheet member 1 and the end portion 2a of the second sheet member 2 are covered with the joining member 3; a method in which the spot beam is scanned by a Galvano scanner; a method in which a line beam formed by using an optical member, such as a cylindrical lens or a diffractive optical device, is irradiated without scanning; and a method in which plural laser lights disposed with predetermined intervals in the width direction of the sheet members 1, 2 are irradiated.

Pressing by the transparent glass plate 32 during irradiation of the laser light R is made for the purpose of improving the joining strength between the first sheet member 1 or the second sheet member 2 and the joining member 3. Although depending on the materials of the joining member 3, the first sheet member 1 and the second sheet member 2, or the irradiation intensity of the laser light R, the joining member is preferably pressed with a pressure of 0.5 kgf/cm² to 100 kgf/cm², and more preferably with a pressure of 1 kgf/cm² to 20 kgf/cm².

The pressing may be achieved by a mechanical pressing, which applies pressure through the top of the transparent glass plate 32. In addition, the pressing may be achieved by blowing an assist gas onto the first sheet member 1, the second sheet member 2 and the joining member 3 from above without using the transparent glass plate 32.

In the pressing achieved by blowing an assist gas, no limitation is intended to the blowing direction of gas G, as far as the gas enables the sheet members 1, 2 to be held in tight contact with each other. However, from the view point that the sheet members 1, 2 can be brought into tight contact with the joining member 3 while efficiently utilizing the blowing gas G, it is preferable to direct the gas G in a direction perpendicular to the top side of the joining member 3. Examples of the kinds of the gas G include inert gasses, such as helium and neon, air, nitrogen, etc.

Although depending on the size of a gas nozzle, the distance between the leading end of the gas nozzle and a portion to which a gas is blown, the direction in which the gas G is blown onto the top side of the joining member 3, the materials of the first sheet member 1 and the second sheet member 2, the irradiation intensity of the laser light R, etc., the gage pressure of the gas G is preferably in the range of not lower than 0.01 MPa to lower than 5 MPa, and more preferably in the range of not lower than 0.1 MPa to lower than 2 MPa.

With the pressure being not lower than 0.01 MPa, there is an advantageous effect in that the sheet members 1, 2 can be held in tighter contact with the joining member 3, and thanks to this, fusion-bonding can be promoted. With the pressure of lower than 5 MPa, there is an advantageous effect in that fluttering of the sheet members 1, 2 or the joining member 3 due to wind pressure can be suppressed.

Blowing of the gas G may be stopped immediately after the stopping of laser irradiation, or may be stopped after the lapse of a certain period of time from stopping of irradiation of laser light R. From the view point that the sheet members 1, 2 molten by the irradiation of laser light R are instantly cooled and thereby the sheet members 1, 2 can be instantly joined to the joining member 3, blowing of gas G is stopped preferably after the lapse of a certain period of time from the stopping of irradiation of laser light R.

No limitation is intended to the laser light R, as long as it can melt the sheet members 1, 2. For example, laser light produced by various oscillation means, such as semiconductor laser, Nd-YAG laser, fiber laser and CO₂ laser can be employed, and for the oscillation method, it is possible to employ so-called CW laser (Continuous Wave Laser), or pulse laser such as femtosecond laser, which continuously irradiate laser light. Among them, semiconductor laser and fiber laser can be appropriately used from the view point that uniform in-plane beam strength can be easily produced.

Moreover, the wavelength of the laser light is preferably in near infrared wavelength range from the view point that it is excellent in penetration capability through many resin materials, facilitates laser light to reach an interface between the sheet members and the joining member 3, and facilitates the thermal-fusion-bonding at the interface between the sheet members 1, 2 and the joining member 3.

Specifically, the wavelength is preferably in the range of 800-2000 µm.

In the take-out step (cf. FIG. 2D), a fusion-bonded portion or the like is cooled according to needs and circumstances, and then the pressing of the transparent glass plate 32 is stopped to take out the sheet joined body 5.

After the completion of the fusion-bonding, as shown in FIG. 2D, the glass plate 32 is pulled upward to complete the joining of the sheet members 1, 2.

In the thus fabricated sheet joined body 5, a stepped portion is prevented from being caused on a side opposite to the side on which the joining member is disposed. Thus, it is possible to suppress damages of conveying rollers, nip rollers or other rollers, or various problems, in, for example, a coating step, a stretching step, a drying step or the like, and furthermore prevent contamination due to fluttering of a tail extension of a sheet member.

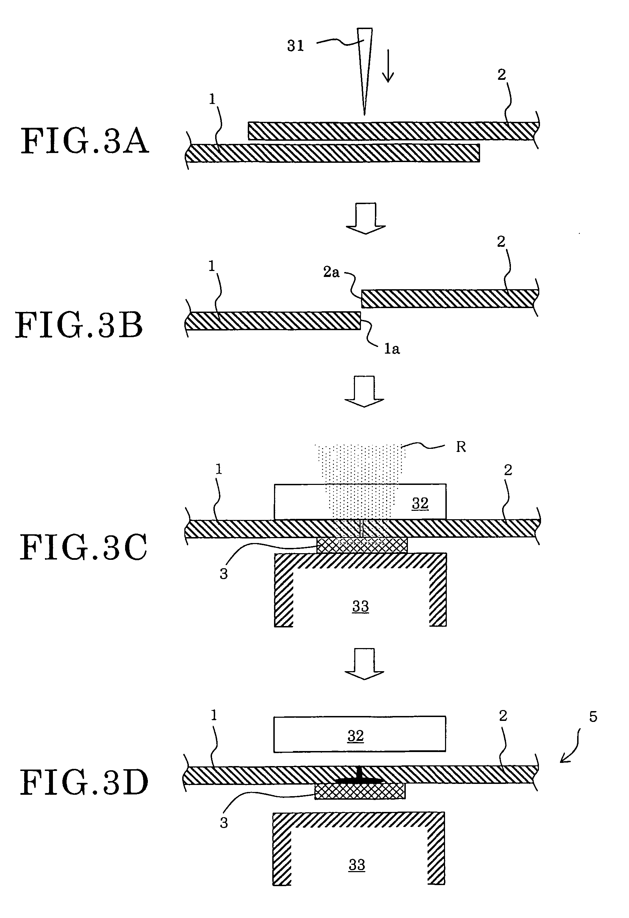

Now, the description will be made for a method of producing a sheet joined body of a second embodiment with reference to the drawings attached hereto. FIGS. 3A-3D are schematic step views, showing the respective steps of producing a sheet joined body 5 according to a sheet joined body producing method of a second embodiment.

In the sheet joined body producing method of the second embodiment, as shown in FIGS. 3A-3D, the joining member 3 is disposed on the side opposite to the laser irradiation side with respect to the sheet members 1, 2. Specifically, the joining member 3 is disposed below the sheet members 1, 2, and laser light is irradiated from above to fabricate a sheet joined body 5.

The sheet joined body producing method of the second embodiment is especially suitable for the case where a joining member including a metal layer of a metal material is used. Specifically, in this arrangement where the metal layer is disposed on the side opposite to the irradiation side of the laser light with the sheet members 1, 2 disposed therebetween, the laser light is not blocked by the metal layer and hence can reach the proximity to the interfaces between the sheet members 1, 2 and the joining member 3. Whereby, the sheet members 1, 2 can be more securely fusion-bonded to the joining member 3.

In the sheet joined body producing method of the second embodiment, the sheet joined body 5 can be fabricated in the same manner as the sheet joined body producing method of the first embodiment except that the joining member 3 is disposed at a different place.

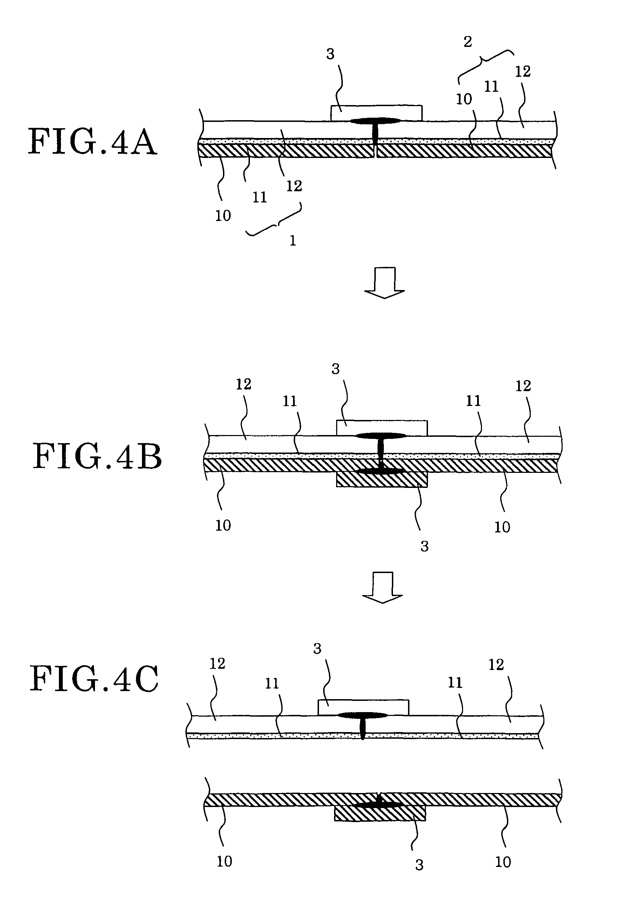

Now, the description will be made for a method of producing a sheet joined body of the third embodiment with reference to the drawings attached hereto. FIGS. 4A-4C are schematic step views, showing the respective steps of producing the sheet joined body 5 according to the sheet joined body producing method of the third embodiment.

The description was made for the first embodiment and the second embodiment by taking, for example, a case where the sheet joined body 5 is fabricated by using sheet members of a single layer, while the description will be made for the third embodiment by taking, for example, a case where sheet members each having plural layers are used. The sheet members of plural layer used in the third embodiment are those which can be delaminated between certain layers with a relatively small force.

In the sheet joined body producing method of the third embodiment, with using the sheet members of plural layers, the preparation step, the covering step and the joining step are carried out in the same manner as the first embodiment and the second embodiment to fabricate a joined body intermediate (cf. FIG. 4A) with a first joining member disposed on one side of the sheet member. Then, a portion, in which the end portions of the sheet members held in abutment with each other is covered on its another side relative to the joined body intermediate, is covered with a second joining member, and then the portion covered with the second joining member is irradiated with laser light to fusion-bond the sheet members to the second joining member to produce a sheet-shaped joined material (cf. FIG. 4B).

Specifically, in this embodiment, as shown in, for example, FIGS. 4A-4D, it is possible to use sheet members each having plural layers made up of a laminate (e.g., trade name: SPV, manufactured by Nitto Denko Corporation), in which a laminate of an adhesive layer 11 and a protection film layer 12 are laminated onto a substrate layer 10.

In a case where such sheet members of plural layers are joined together, for example, a first joining member is disposed on the side of the protection film layer 12 in the same manner as the first embodiment and the second embodiment to join the sheet members of plural layer together (cf. FIG. 4A). Then, a second joining member is disposed on the side of the substrate layer 10, and is irradiated with laser light in the same manner as the first embodiment and the second embodiment to join the substrate layers 10 of the first and second sheet members together via this second joining member. Thus, a sheet-shaped joined material having joining members disposed on the opposite sides thereof is fabricated (cf. FIG. 4B).

The thus fabricated sheet-shaped joined material is delaminated between the substrate layer 10 and the adhesive layer 11, thereby producing a sheet joined body 5 that suppresses occurrence of a stepped portion on at least one side thereof (cf. FIG. 4C).

The thus produced sheet joined body 5, which suppresses occurrence of a stepped portion on at least one side thereof in the same manner as the sheet joined body 5 produced in the first embodiment and the second embodiment, can suppress damages of conveying rollers, nip rollers or other rollers, or various problems, in, for example, a coating step, a stretching step, a drying step or the like, and furthermore prevent contamination due to fluttering of a tail extension of a sheet member.

It is a matter of course that technical matters of conventional arts can be appropriately employed to such an extent as not to significantly deteriorate the advantageous effects of the present invention.

For example, in the above embodiments, as a fixing means for fixing sheet members, a stage and a glass plate were described as an actual form, but the present invention is not necessarily limited to such embodiment. For example, in place of the glass plate, it is possible to employ a spherical glass or cylindrical glass such that they are rotated in compliance with the irradiation of laser light.

The above embodiments were described by taking, for example, a case where a joining member previously cut into a predetermined size is used, but the present invention is not necessarily limited to this. For example, it is possible to use a sheet member that is not previously cut into a predetermined size, in which a direction orthogonal to the elongated direction of the sheet member is designated as a lengthwise direction. In this case, it is possible to carry out a step of cutting a joining member to the width of the sheet members after the joining member is joined to the sheet members by the irradiation of laser light.

In the present invention, a joined portion with the sheet members and the joining member joined together may be continuously formed across the width of the sheet members, and for example, joined portions may be formed with predetermined intervals in the width direction.

### EXAMPLES

Now, the description will be made for the present invention with reference to the following examples without intention to limit the present invention thereto.

### (Example 1)

Two sheet members made of triacetylcellulose (TAC) (width: 50 mm, thickness: 80 µm, manufactured by FUJIFILM Corporation) were used, whose end portions were overlapped with each other, fixed in position, and cut by a cutter. End faces of the two sheet members formed by cutting were brought into abutment with each other to have an abutted portion. The joining member of the same kind as that of the sheet members was covered on its one side with a light absorbing agent (trade name: Clearweld LD120C, 20 nL/mm², manufactured by Gentex Corporation), and the joining member was disposed so as to allow the covered side to be in contact with the sheet members, while a portion with the end portions of the sheet members held in abutment with each other was covered with the joining member from above. The sheet members and the joining member held in this state were mounted on a stage, and were being pressed at a pressure of 10 kgf/cm² with a glass plate, while a semiconductor laser light (940 nm, 30W, a spot diameter of 2.0 mm 0) was scanned at a rate of 100 mm/sec from above the joining member.

As a result, two sheet members could be joined together via the joining member, and thus a sheet joined body having no stepped portion on its one side could be fabricated. The tensile strength of the thus produced sheet joined body was measured and found that a high strength, namely 120 N/25 mm could be confirmed.

### (Example 2)

A sheet joined body was fabricated in the same manner as Example 1 except that a joining member is disposed below the sheet members, and the sheet members are pressed from above.

As a result, it was confirmed that the sheet joined body has a high tensile strength, namely 120 N/25 mm.

### (Example 3)

A sheet joined body was fabricated in the same manner as Example 2 except that sheet members having a width of 1,400 mm are used.

It was confirmed in the thus fabricated sheet body that joining was made with a good result. When this sheet joined body was conveyed by the roll-to-roll system with a tensile force of 300 N, it was conveyed without breakage of the sheet joined body. Successive coating could also be made on a side with no stepped portion caused (no joining member was attached and hardened).

### (Comparative Example 1)

By using an adhesive tape (trade name: DAMPLON Tape, manufactured by Nitto Denko Corporation) having a width of 50 mm, TAC sheet members (having a width of 1,400 mm) were joined together as shown in FIG. 5A in the same manner as Example 1. Specifically, sheet members were joined together by attaching an adhesive tape to both the sides of a portion with the end portions of the sheet members held in abutment with each other.

As a result, the joining strength of the thus produced sheet joined body was a relatively high (tensile strength: 130 N/25 mm), but a stepped portion was caused on any of the sides, which caused problems, such as damages of nip rolls during the conveyance by the roll-to-roll system, or stagnation of a coated chemical liquid.

### (Comparative Example 2)

By using an adhesive double coated tape having a width of 50 mm, TAC sheet members (having a width of 1,400 mm) of the same kind of Example 1 were joined together as shown in FIG. 5B. Specifically, one sheet member was overlapped onto another sheet member, and both the sheet members were joined together via the adhesive double coated tape previously disposed in an overlapped potion.

As a result, the tensile strength of the thus produced sheet joined body was 80 N/25 mm, and a stepped portion was caused on any of the sides of the sheet joined body, which made continuous coating impossible.

### (Comparative Example 3)

TAC sheet members (having a width of 1,400 mm) of the same kind of Example 1 were joined together, as shown in FIG. 5D. Specifically, one sheet member was overlapped 100 mm in width onto another sheet member, and an area having a width of 2 mm from the end edge of the upper sheet member and its corresponding area of the lower sheet member, in the overlapped portion, were joined together by laser irradiation with the same pressing conditions and laser irradiation conditions as those of Example 1.

As a result, the joining strength of the thus produced sheet joined body was relatively high (tensile strength: 110 N/25 mm), but a stepped portion was caused on any of the sides, which made continuous coating impossible.

This specification is by no means intended to restrict the present invention to the preferred embodiments set forth therein. Various modifications to the method of producing sheet joined body and the sheet joined body, as described herein, may be made by those skilled in the art without departing from the spirit and scope of the present invention as defined in the appended claims.

## Claims

1. A method of producing a sheet joined body, comprising a covering step of bringing end faces of sheet members, which sheet members containing a thermoplastic resin, into abutment with each other to provide an abutted portion and covering one side of the abutted portion with a joining member, and a joining step of irradiating a portion covered with the joining member with laser light to fusion-bond the sheet members and the joining members together, thereby joining the sheet members together.

2. The method according to claim 1, wherein a light absorbing agent is disposed between the sheet members and the joining member in the covering step.

3. The method according to any one of claims 1 and 2, wherein the joining member, which contains a light absorbing agent, is used.

4. The method according to any one of claims 1 to 3, wherein the joining member that is made of a resin material of the same kind as that of at least one of the sheet members is used.

5. A sheet joined body, wherein sheet members containing a thermoplastic resin are joined together with end portions thereof held in abutment with each other, in which one side of the abutted portion of the end portions is covered with a joining member, and a portion covered with the joining member is irradiated with laser light to have the sheet members and the joining member fusion-bonded to each other.
